# EUROPEAN PATENT SPECIFICATION

(11) **EP 2 312 977 B1**
(45) Date of publication and mention of the grant of the patent: **12.11.2014**
(21) Application number: 09781928.8
(22) Date of filing: 18.08.2009
(51) Int. Cl.: A47J 31/18, A47G 19/14, A47J 31/44

(54) **A COFFEEPOT**
KAFFEEKANNE
CAFETIÈRE

(30) Priority: 18.08.2008 TR 200806163
(43) Date of publication of application: 27.04.2011
(73) Proprietor: Arçelik Anonim Sirketi, 34950 Istanbul (TR)
(72) Inventor: UTAS, Ilker, 34950 Istanbul (TR)
(86) International application number: PCT/EP2009/060643
(87) International publication number: WO 2010/020620

(56) References cited:
- WO-A-03/032792
- WO-A-2005/122687
- US-B1- 6 655 261

## Description

The present invention relates to a coffeepot used in coffee machines that preferably prepare Turkish coffee.

In an automatic coffee machine suitable for preparing Turkish coffee, coffee is cooked in a coffeepot that is disposed on a heater located in a cooking room.

In the International Patent Application WO2005/122687, a pot support is located around the body of the coffeepot wherein coffee is cooked in an automatic coffee machine. The heater under the coffeepot ascends and contacts the bottom of the coffeepot during the cooking period, wherein its mentioned contact with the bottom of the coffeepot is interrupted at the end of the cooking period by descending. Bearing on the fixed bottom tray around the movable heater, the pot support both functions as a leg for the coffeepot and as a guide in order that the coffeepot fits the ascending heater as centered. The pot support provides the said contact of the coffeepot with the heater to be interrupted by bearing on the fixed bottom tray as the heater descends after the cooking process. The pot support and the body are manufactured from aluminum material and the pot support and the coffeepot are joined by an interference fitting process and / or by adhering. Before the grouping process by tight fit, the pot support is heated up to 300 °C while the body of the coffeepot is kept at the ambient temperature. Dimensions of the pot support expand a little as a result of the heating and the pot support is mounted to the body of the coffeepot.

In coffee cooking process, the body of the coffeepot is heated by the heater and the body expands a little by the effect of the heat. The user has a habit of cleaning the coffeepot with water at the room temperature, for example with tap water after the Turkish coffee cooking process while the coffeepot is still hot. The dimensions of the coffeepot body expanded during the cooking process shrink by contact with cold water. Since water is filled firstly into the coffeepot body while the coffeepot is washed, the pot support mounted to the coffeepot body by interference-fit process slips from the periphery of coffeepot body.

The aim of the present invention is the realization of a coffeepot used particularly in coffee machines and wherein the components are prevented from being detached from each other by increased firmness.

The coffeepot realized in order to attain the aim of the present invention is explicated in the claims.

The coffeepot used in the coffee machine and wherein the cooking process is performed comprises a support in the form of a truncated cone, having lateral surfaces in the form of a concave curve, encircling the body of the coffeepot, contacting the surface whereon it is disposed or the bottom tray of the coffee machine by extending below the bottom level, the support is manufactured separately from the body and assembled to the body by a snap-fit process without performing processes such as tight-fit requiring heat treatment or adhering. Thus in the coffeepot, the expansion differences between the components do not matter anymore, a firm support - body assembly is provided and the support is prevented from detaching from the body and falling.

The coffeepot comprises a channel entirely or partially encircling the body and one or more flange located on the joint edge at the upper side of the support, entering the channel by stretching during the mounting of the support to the body.

In an embodiment of the present invention, the coffeepot comprises a ring channel which is located on the body at the upper side of the channel wherein snap-fit locking is performed and which is adjacent to the channel and a ring mounted to this ring channel. The depth of the ring channel is less than the depth of the channel there under and as a result of the snap-fit assembly of the support and the body, the ring presses on the upper surface of the flange by being clinched by the upper wall of the ring channel and by overflowing through the channel at the lower side, thus the firmness of the snap-fit assembly is increased and the ring is prevented from loosening and rotating.

In another embodiment of the present invention, the coffeepot comprises one or more cut-outs located on the joint edge that is at the upper side of the support and simplifying the snap-fit assembly of the support to the body by increasing the flexibility of the support.

In this embodiment, the support acquires flexibility by means of the cut-outs, the joint edge bends towards the outside in the radial direction while the support is mounted to the body, the support is moved forward on the body until the flange between the cut-outs fit in the channel and the support - body assembly is completed.

The coffeepot realized in order to attain the aim of the present invention is illustrated in the attached figures, where:

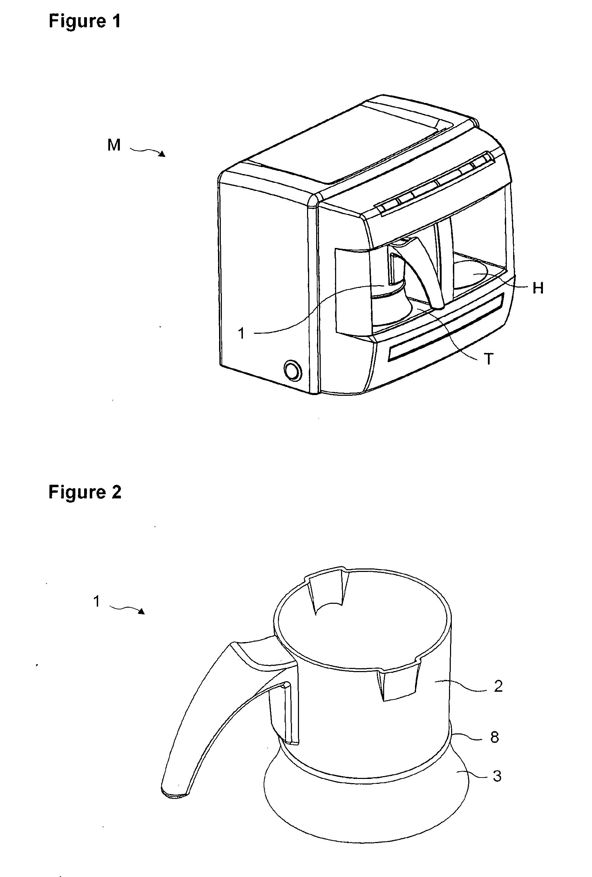

Figure 1 - is the perspective view of a coffee machine.
Figure 2 - is the perspective view of a coffeepot.

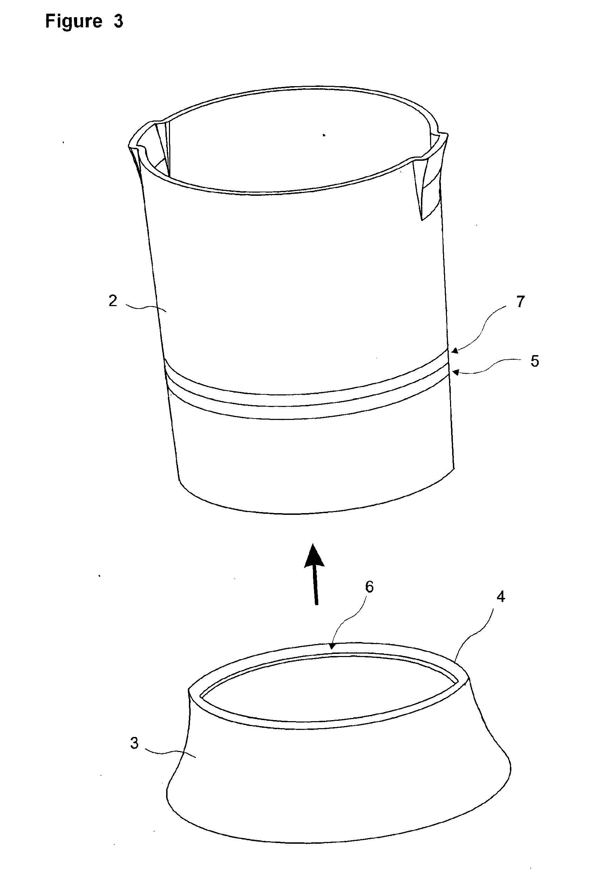

Figure 3 - is the perspective view of a coffeepot wherein the body and the support parts are detached.
Figure 4 - is the schematic view of a coffeepot.
Figure 5 - is the schematic view of detail D in Figure 4.

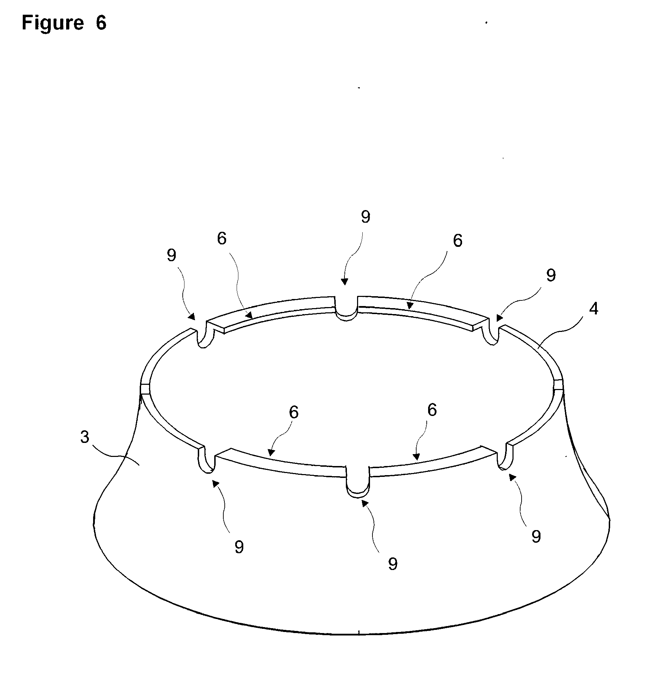

Figure 6 - is the perspective view of a coffeepot support in an embodiment of the present invention.

Elements shown in figures are numbered as follows:
1. Coffeepot
2. Body
3. Support
4. Joint edge
5. Channel
6. Flange
7. Ring channel
8. Ring

### 1. Cut-out

The coffeepot (1) suitable for using in automatic coffee machines cooking Turkish coffee is placed onto the bottom tray (T) of the coffee machine (M) in alignment with the heater (H) that is at the center of the bottom tray (T) after ingredients to be cooked such as coffee, sugar, water are added therein and the cooking process is performed. At the end of the coffee cooking process, the coffeepot (1) is removed from the coffee machine (M) to pour coffee into cups and then cleaned by being washed with water by the user. The heater (H) can ascend or descend, when it ascends it provides the coffeepot (1) to be heated by contacting the bottom thereof during the determined cooking period and at the end of the cooking period it descends wherein its mentioned contact with the coffeepot (1) is interrupted.

The coffeepot (1) comprises a body (2) wherein the cooking process is performed, a handle and a support (3) in the form of a truncated cone, having lateral surfaces in the form of a concave curve, mounted to the outside of the lateral wall or near the lower side of the body (2), encircling the body (2) and carrying the body (2) by contacting the surface whereon it is disposed or the bottom tray (T) of the coffee machine (M) by extending below the bottom level of the body (2).

The support (3) provides the coffeepot (1) to fit the heater (H) as centered by contacting the periphery of the heater (H) which ascends during the cooking process in the coffee machine (M) and the said contact of the coffeepot (1) with the heater (H) to be interrupted by bearing on the bottom tray (T) encircling the heater (H) as the heater descends at the end of the cooking process.

The support (3) is manufactured separately from the body (2) and comprises a circular joint edge (4) located at the upper side thereof and providing the support (3) to be assembled to the body (2).

The coffeepot (1) of the present invention comprises one or more channels (5) located on the body (2), entirely or partially encircling the body (2) and one or more flanges (6) located on the joint edge (4), entering the channel (5) by stretching during the mounting of the support (3) to the body (2) and thus providing the assembly of the support (3) to the body (2) by snap-fit locking.

The support (3) is assembled to the body (2) only by the snap-fit locking of the flange (6) located on the joint edge (4) to the channel (5), thus use of applications requiring heat treatment such as tight-fit or wherein the effect is decreased in the course of time such as adhering is not required anymore and a firm support (3) - body (2) assembly is provided.

In an embodiment of the present invention, the coffeepot (1) comprises a ring channel (7) which is located on the body (2) at the upper side of the channel (5) wherein snap-fit locking is performed and which is adjacent to the channel (5) and entirely encircling the body (2), and a ring (8) mounted to the ring channel (7).

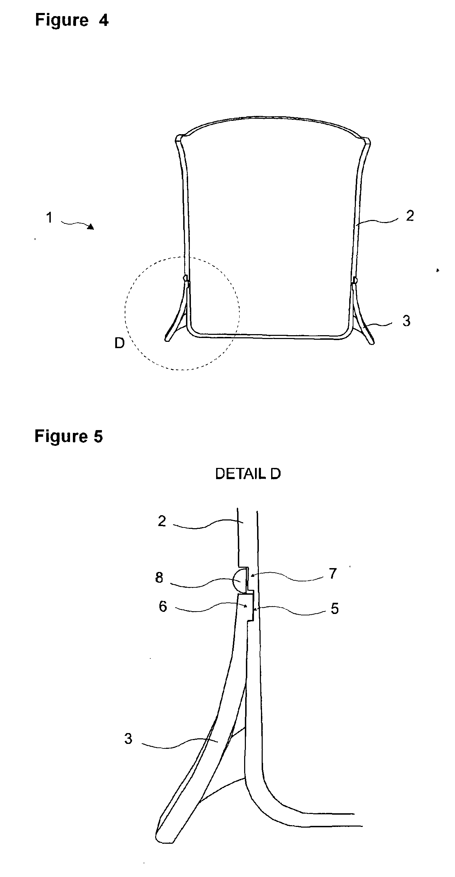

The depth of the ring channel (7) is less than the depth of the channel (5) and thus the ring channel (7) forms a step on the lateral surface of the body (2) at the upper side of the channel (5) (Figure 5). In the snap-fit assembly of the support (3) and the body (2), the ring (8) is clinched by the upper wall of the ring channel (7) and presses on the upper surface of the flange (6) by overflowing downward from the ring channel (7), thus both the firmness of the snap-fit assembly between the body (2) and the support (3) is increased and the ring (8) is prevented from loosening and rotating around the body (2).

The ring (8) is manufactured preferably from stainless steel and enhances the aesthetic appearance by covering the joint point of the body (2) and the support (3).

In another embodiment of the present invention, the coffeepot (1) comprises one or more cut-outs (9) located on the joint edge (4) and simplifying the snap-fit assembly of the support (3) to the body (2) by increasing the flexibility of the support (3).

In this embodiment, the support (3) acquires flexibility by means of the cut-outs (9). The joint edge (4) bends towards the outside in the radial direction while the support (3) is mounted to the body (2), the support (3) is moved forward on the body (2) until the flange (6) between the cut-outs (9) fit in the channel (5) and the support (3) - body (2) assembly is completed.

In the coffeepot (1), the expansion differences between the support (3) and the body (2) do not affect the snap-fit assembly between the support (3) and the body (2), the problem of the support (3) being detached from the body (2) due to expansion and shrinkage is entirely solved.

## Claims

1. A coffeepot (1) suitable for use in automatic coffee machines preparing Turkish coffee whereby the coffeepot (1) is disposable on a heater in order to cook coffee, the coffeepot (1) comprising a body (2) wherein the cooking process is performed, a support (3) mounted to the outside of the lateral wall of the body (2), encircling the body (2), carrying the body (2) by contacting the surface whereon it is disposed or the bottom tray (T) of the coffee machine (M) by extending below the bottom level of the body (2) and having a circular joint edge (4) that provides the support (3) to be mounted to the body (2), one or more channels (5) located on the body (2), entirely or partially encircling the body (2) and one or more flanges (6) located on the joint edge (4), entering the channel (5) by stretching during the mounting of the support (3) to the body (2) and thus providing the assembly of the support (3) to the body (2) by snap-fit locking, **characterized by** a ring channel (7) located at the upper side of the channel (5) and being adjacent to the channel (5), entirely encircling the body (2), and by a ring (8) mounted to the ring channel (7).

2. A coffeepot (1) as in Claim 1, **characterized by** the ring channel (7) having less depth than the depth of the channel (5).

3. A coffeepot (1) as in Claim 2, **characterized by** the ring (8) clinched by the upper wall of the ring channel (7) at the end of the snap-fit assembly of the support (3) and the body (2), overflowing downward from the ring channel (7) and entirely pressing on the upper surface of the flange (6).

4. A coffeepot (1) as in any one of the above Claims, **characterized by** one or more cut-outs (9) located on the joint edge (4) and simplifying the snap-fit assembly of the support (3) to the body (2) by increasing the flexibility of the support (3).

## Patentansprüche

1. Kaffeekanne (1), die zur Verwendung in automatischen Kaffeemaschinen geeignet ist, die türkischen Kaffee zubereiten, wobei die Kaffeekanne (1) auf einem Heizer angeordnet werden kann, um Kaffee zu brühen, wobei die Kaffeekanne (1) Folgendes umfasst: einen Gehäusekörper (2), in dem der Brühvorgang durchgeführt wird, einen Träger (3), der an der Außenseite der Seitenwand des Gehäusekörpers (2) angebracht ist und den Gehäusekörper (2) umgibt und den Gehäusekörper (2) trägt, indem er mit der Fläche, auf der dieser angeordnet ist, oder mit dem Bodenfach (T) der Kaffeemaschine (M) in Kontakt steht, indem er sich unterhalb der unteren Ebene des Gehäusekörpers (2) erstreckt, und aufweisend eine kreisförmige Verbindungskante (4), die es ermöglicht, den Träger (3) am Gehäusekörper (2) anzubringen, einen oder mehrere Kanäle (5), die am Gehäusekörper (2) angeordnet sind und den Gehäusekörper (2) ganz oder teilweise umgeben, und einen oder mehrere Flansche (6), die an der Verbindungskante (4) angeordnet sind und in den Kanal (5) eintreten, indem sie sich während des Anbringens des Trägers (3) am Gehäusekörper (2) strecken und so das Anbringen des Trägers (3) am Gehäusekörper (2) mittels Einrasten ermöglichen, **gekennzeichnet durch** einen Ringkanal (7), der an der Oberseite des Kanals (5) angeordnet ist und zu dem Kanal (5) benachbart ist und den Gehäusekörper (2) vollständig umgibt, und **durch** einen Ring (8), der im Ringkanal (7) angebracht ist.

2. Kaffeekanne (1) nach Anspruch 1, **dadurch gekennzeichnet, dass** der Ringkanal (7) eine geringere Tiefe als die Tiefe des Kanals (5) aufweist.

3. Kaffeekanne (1) nach Anspruch 2, **dadurch gekennzeichnet, dass** der Ring (8) am Ende der Einrastmontage des Trägers (3) und des Gehäusekörpers (2) von der oberen Wand des Ringkanals (7) eingeklemmt wird und von dem Ringkanal (7) nach unten überläuft und vollständig auf die Oberfläche des Flansches (6) drückt.

4. Kaffeekanne (1) nach einem der vorangehenden Ansprüche, **gekennzeichnet durch** eine oder mehrere Ausnehmungen (9) an der Verbindungskante (4), die die Einrastmontage des Trägers (3) am Gehäusekörper (2) erleichtern, indem sie die Flexibilität des Trägers (3) steigern.

## Revendications

1. Un pot de café (1) adapté à utiliser dans des machines à café automatiques pour la préparation du café turc où le pot de café (1) peut être disposé sur un dispositif de chauffage afin de préparer le café, le pot de café (1) comprenant un corps (2) où le processus de cuisson est effectué, un support (3) qui est monté à l'extérieur de la paroi latérale du corps (2), qui entoure le corps (2) et supporte le corps (2) en étant en contact avec la surface sur laquelle il est disposé ou avec le bac de fond (T) de la machine à café (M) en s'étendant en dessous du niveau de fond du corps (2) et qui présente un bord de joint circulaire (4) qui permet au support (3) d'être monté au corps (2), un ou plusieurs canaux (5) qui sont situés sur le corps (2), entièrement ou partiellement entourant le corps (2), et une ou plusieurs brides (6) qui sont situées sur le bord de joint (4), entrant dans le canal (5) en s'étirant pendant le montage du support (3) au corps (2) et donc permettant le montage du support (3) au corps (2) par encliquetage, **caractérisé par** un canal de bague (7) qui est situé au côté supérieur du canal (5) et adjacent au canal (5), en entourant entièrement le corps (2) et par une bague (8) montée au canal de bague (7).

2. Un pot de café (1) selon la Revendication 1, **caractérisé par** le canal de bague (7) avec une profondeur inférieure à la profondeur du canal (5).

3. Un pot de café (1) selon la Revendication 2, **caractérisé par** la bague (8) qui est contrainte par la paroi supérieure du canal de bague (7) à la fin de l'assemblage par encliquetage du support (3) et du corps (2), débordant vers le bas à partir du canal de bague (7) et s'appuyant entièrement sur la surface supérieure de la bride (6).

4. Un pot de café (1) selon l'une quelconque des revendications précédentes, **caractérisé par** une ou plusieurs découpes (9) situées sur le bord de joint (4), qui simplifient l'assemblage par encliquetage du support (3) et du corps (2) en augmentant la flexibilité du support (3).
